# FASCICULE DE BREVET EUROPEEN

(11) **EP 3 353 401 B1**
(45) Date de publication et mention de la délivrance du brevet: **07.08.2019**
(21) Numéro de dépôt: 16781515.8
(22) Date de dépôt: 20.09.2016
(51) Int. Cl.: B64C 11/44, B64C 11/38, B64C 11/48, B64D 27/10, F01D 25/04, B62D 27/00, F01D 25/28, F02C 7/36, B64D 27/00

(54) **ENSEMBLE AMORTISSEUR POUR CONNEXION HYDRAULIQUE ET ÉLECTRIQUE D'UNE SOUFFLANTE NON CARENEE**
STOSSDÄMPFERANORDNUNG ZUR HYDRAULISCHEN UND ELEKTRISCHEN VERBINDUNG EINES NICHT STROMLINIENFÖRMIGEN GEBLÄSES
SHOCK ABSORBER ASSEMBLY FOR HYDRAULICALLY AND ELECTRICALLY CONNECTING A NON-STREAMLINED BLOWER

(30) Priorité: 21.09.2015 FR 1558881
(43) Date de publication de la demande: 01.08.2018
(73) Titulaire: Safran Aircraft Engines, 75015 Paris (FR)
(72) Inventeur: ZAMAI, Laurent, 91210 Draveil (FR); PALIS, Matthieu, 94100 Saint Maur Des Fosses (FR)
(74) Mandataire: Cabinet Camus Lebkiri
(86) Numéro de dépôt international: PCT/FR2016/052381
(87) Numéro de publication internationale: WO 2017/051111

(56) Documents cités:
- FR-A1- 2 660 363

## Description

### DOMAINE TECHNIQUE DE L'INVENTION

L'invention se rapporte aux soufflantes non carénées, notamment aux turbopropulseurs et aux turbomachines à doublet d'hélices contrarotatif appelées usuellement « open rotor » en langue anglaise. Elle se rapporte plus particulièrement à un système de connexion combinée hydraulique et électrique d'une soufflante non carénée.

### ETAT DE LA TECHNIQUE ANTERIEURE

Le moteur à soufflante non carénée, tel que l'open rotor, est un type de moteur qui présente un grand intérêt du fait sa grande efficacité thermopropulsive. Ce type de moteur est principalement composé d'un générateur de gaz et d'un propulseur équipé de deux hélices contrarotatives. Un tel moteur est décrit dans le document FR 2 660 363 A1 qui est considéré comme l'état de la technique le plus proche.

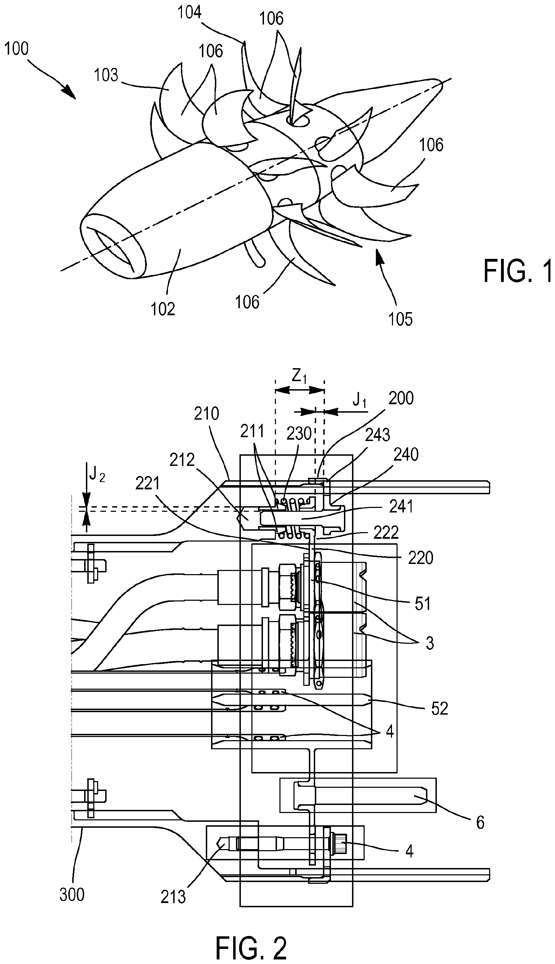

La figure 1 représente schématiquement une soufflante non carénée 100 selon l'état de la technique. La soufflante non carénée 100 comporte un turboréacteur 102 et un turbopropulseur 105. Le turbopropulseur 105 est équipé d'un rotor amont 103 et d'un rotor aval 104, le rotor amont 103 et le rotor aval 104 formant un doublet contrarotatif dont l'orientation des aubes 106, formant les rotors 103, 104, est pilotée par des systèmes d'orientation, également appelés systèmes de changement de pas, appelés usuellement « Pitch Control Mechanism » (PCM) en langue anglaise.

Au niveau de la zone turbopropulseur 105 et plus précisément entre les deux systèmes de changement de pas, l'open rotor comporte des canalisations et des harnais électriques traversant l'open rotor et qui sont connectés entre ces deux modules. Ces deux modules ont des déplacements axiaux et radiaux importants lorsque la soufflante est en fonctionnement. Par conséquent, les canalisations et les harnais électriques connectés aux deux modules subissent des contraintes liées aux déplacements des modules. En outre, le système d'orientation du rotor aval doit être monté à l'aveugle.

### EXPOSE DE L'INVENTION

L'invention vise à remédier à tout ou partie des inconvénients de l'état de la technique identifiés ci-dessus, et notamment à fournir un ensemble amortisseur permettant de limiter les contraintes sur les canalisations et les harnais électriques transitant entre deux modules de l'open-rotor et permettant un montage à l'aveugle et centré de l'ensemble amortisseur et d'un deuxième module à l'ensemble amortisseur.

Dans ce dessein, un aspect de l'invention se rapporte à un ensemble amortisseur adapté pour être relié et positionné entre deux modules d'une soufflante non carénée, les deux modules étant reliés hydrauliquement et électriquement entre eux au moyen de connecteurs électriques et hydrauliques, et présentant des mouvements relatifs, ledit ensemble amortisseur comportant :
- une virole d'extension comportant une première interface adaptée pour être solidarisée sur le premier module ;
- un carter support connecteur comportant :
   - une troisième interface adaptée pour être solidarisée sur le deuxième module ; et
   - une quatrième interface permettant de réaliser une liaison mécanique entre le carter support connecteur et une deuxième interface de ladite virole d'extension ;
- une pluralité de moyens élastiques agencés entre la virole d'extension et le carter support connecteur pour amortir les déplacements relatifs entre la virole d'extension et le carter support connecteur ;
- un élément de bridage solidarisé sur la troisième interface du carter support connecteur et agencé de manière à empêcher la déconnexion de la liaison mécanique entre ladite virole d'extension et le carter support connecteur, ledit élément de bridage comportant une butée en appui sur la virole d'extension de manière à définir un espace entre la virole d'extension et l'élément de bridage ; et les moyens élastiques sont agencés pour qu'il existe un jeu résiduel entre l'élément de bridage et le carter support connecteur.

Outre les caractéristiques principales qui viennent d'être mentionnées dans le paragraphe précédent, l'ensemble amortisseur selon l'invention peut présenter une ou plusieurs caractéristiques complémentaires parmi les suivantes, considérées individuellement ou selon les combinaisons techniquement possibles :
- la deuxième interface de ladite virole d'extension comporte une pluralité de bossage, chaque bossage formant une surface d'appui d'un moyen élastique de la pluralité de moyens élastiques et comportant un orifice ; et l'élément de bridage comporte une pluralité de pions de bridage adaptés pour traverser les orifices des bossages de la deuxième interface de la virole d'extension. On entend par bossage une surépaisseur d'une pièce, destinée à être dressée pour recevoir la face d'appui d'une tête de vis ou d'un écrou ou d'un moyen élastique comme un ressort par exemple.
- la deuxième interface de ladite virole d'extension comporte une pluralité d'orifices de bridage adaptés pour solidariser l'élément de bridage ;
- le carter support connecteur comporte au moins un premier perçage permettant le passage d'un connecteur électrique de la première interface de la virole d'extension à la troisième interface du carter support connecteur et un deuxième perçage permettant le passage d'un connecteur hydraulique de la première interface de la virole d'extension à la troisième interface du carter support connecteur ;
- la troisième interface du carter support connecteur comporte une pluralité de pions de centrage adaptés pour coopérer avec le deuxième module de façon à centrer le deuxième module par rapport au carter support connecteur ;
- la virole d'extension comporte au moins une patte de fixation adaptée pour coopérer avec le deuxième module de manière à centrer le deuxième module par rapport au carter support connecteur.

L'invention se rapporte également à une soufflante non carénée comportant un ensemble amortisseur selon l'un des modes de réalisation précédemment décrits positionné entre deux modules d'une soufflante non carénée reliés hydrauliquement et électriquement entre eux et présentant des mouvements relatifs.

L'invention se rapporte également à un procédé d'assemblage de l'ensemble amortisseur selon l'un des modes de réalisation précédemment décrit comportant :
- une première étape de positionnement des moyens élastiques au niveau de la deuxième interface de la virole d'extension ;
- une deuxième étape d'emmanchement du carter support connecteur et de fixation des connecteurs électriques et hydrauliques au carter support connecteur en comprimant les moyens élastiques ;
- une troisième étape de fixation du carter support connecteur à la virole d'extension au moyen de l'élément de bridage.

### BREVE DESCRIPTION DES FIGURES

D'autres caractéristiques et avantages de l'invention ressortiront à la lecture de la description qui suit, en référence aux figures annexées, qui illustrent :
- la figure 1, une représentation schématique d'une soufflante non carénée ;
- la figure 2, une vue en coupe d'un ensemble amortisseur selon un mode de réalisation de l'invention ;
- les figures 3A à 3E, les différentes étapes d'un procédé d'assemblage de l'ensemble amortisseur selon un mode de réalisation de l'invention ;
- les figures 4A à 4F, les différentes étapes d'un procédé d'accostage d'un deuxième module à un ensemble amortisseur selon un mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

La figure 1 représentant schématiquement une soufflante non carénée 100 a déjà été décrite précédemment.

La figure 2 illustre une vue en coupe d'un ensemble amortisseur 200 permettant de réduire les contraintes sur les connexions hydrauliques et électriques au niveau de la zone turbopropulseur 105 et plus précisément entre deux modules présentant des mouvements relatifs, tels que par exemple deux systèmes de changement de pas des aubes 106.

L'ensemble amortisseur 200 est formé par :
- une virole d'extension 210 comportant une première interface 201 (non visible sur la figure 2) adaptée pour être solidarisée sur un premier module 300 de changement de pas. La première interface 201 correspond à l'extrémité amont (selon le sens d'écoulement du fluide dans la soufflante) de la virole d'extension. Cette extrémité amont est adaptée pour être connectée à un fourreau central (non représenté), formant un tube statique, dans lequel sont agencés des canalisations hydrauliques et/ou des harnais électriques permettant de relier hydrauliquement et électriquement la partie amont de la soufflante 100 au niveau de la partie turboréacteur 102 et la partie aval du turbopropulseur formée sensiblement au niveau du rotor aval 104.;
- un carter support connecteur 220 comportant une troisième interface 222 adaptée pour être en connexion en aval avec le système de changement de pas du rotor aval 104 et une quatrième interface 221 permettant de réaliser une liaison mécanique entre le carter support connecteur et une deuxième interface 202 de ladite virole d'extension 210 ;
- une pluralité de moyens élastiques 230 (un seul visible à la figure 2) agencés entre la virole d'extension 210 et le carter support connecteur 220 pour amortir les déplacements relatifs entre la virole d'extension et le carter support connecteur ;
- un élément de bridage 240 solidarisé sur la troisième interface 222 du carter support connecteur agencé de manière à empêcher la déconnexion de la liaison mécanique entre la virole d'extension 210 et le carter support connecteur 220. L'élément de bridage 240 comporte une butée 243 en appui sur la virole d'extension 210 de manière à définir lorsque l'élément de bridage est solidarisé sur la troisième interface 222 du carter support connecteur un espace Z1 entre la virole d'extension et l'élément de bridage.

Les moyens élastiques 230, qui sont ici des ressorts de compression, sont placés autour de bossages 211 de la deuxième interface de la virole d'extension de sorte qu'ils se retrouvent comprimés entre la virole d'extension 210 et le carter support connecteur 220 lorsque l'ensemble amortisseur est assemblé. Les moyens élastiques 230, ressorts, restent comprimés en opération de la soufflante. Ils permettent d'assurer le contact entre les connecteurs électriques/hydrauliques fixés sur le tube statique ou fourreau et le moyen de changement de pas, dit deuxième module, et ce quelques soient les déplacements axiaux relatifs entre le tube statique et le deuxième module. Cela permet d'assurer la continuité électrique. Ce système de ressort permet d'enclencher les connecteurs électriques par la pression exercée par les ressorts contre le carter support connecteur, sans avoir besoin de venir les fixer à l'aide d'un écrou, ce qui permet un montage du deuxième module sur le fourreau, tube statique i.e. premier module, en aveugle. En effet, les moyens élastiques 230 ont pour fonction de pousser dans le sens inverse de déplacement du montage lors du fonctionnement de la soufflante. Ainsi en fonctionnement de la soufflante, même si le montage se déplace, le ressort va pousser ce qui permet d'assurer continuellement la connexion électrique. Ainsi la poussée des ressorts permet de maintenir axialement l'ensemble tout en autorisant un certain déplacement axial maitrisé et défini lors de la conception.

Chacun des bossages 211 (un seul est représenté à la figure 2) comporte un orifice 212 adapté pour être traversé par un pion de bridage 241 de l'élément de bridage 240.

En outre, la deuxième interface de la virole d'extension 210 comporte une pluralité d'orifice de bridage 213 adaptés pour solidariser l'élément de bridage 240 par un système de vis 214 traversant à la fois l'élément de bridage 240 et un des orifices de bridage 213.

En outre, la troisième interface du carter support connecteur 220 comporte une pluralité de pions de centrage 6 (un seul est visible à la figure 2) adaptés pour coopérer avec le deuxième module de façon à centrer le deuxième module par rapport au carter support connecteur 220. Les pions de centrage 6 ont pour fonction de garantir que le carter support connecteur 220, supportant la connexion électrique et hydraulique, reste solidaire du second module. Ils ont également pour fonction de permettre le centrage du carter support connecteur 220 par rapport au deuxième module lors de l'assemblage du système. Le centrage du carter support connecteur 220 par rapport au deuxième module est d'autant plus assuré par un système de chanfrein sur les pions de centrage 6 et les perçages correspondant sur le deuxième module. En cas de non alignement du carter support connecteur 220 par rapport au deuxième module lors du début du montage, les surfaces inclinées, du fait des chanfreins, des pions de centrage et des perçages correspondants viennent en contact et centrent les tiges et donc l'ensemble du carter support connecteur par rapport au deuxième module. Ceci permet également d'assurer la connexion à l'aveugle.

A la figure 2 sont visibles les connecteurs électriques 3 et les connecteurs hydrauliques 4 qui permettent d'alimenter en huile les systèmes de changement de pas. Le carter support connecteur comporte au moins un premier perçage 51 permettant le passage d'un connecteur électrique de la première interface de la virole d'extension à la troisième interface du carter support connecteur et un deuxième perçage 52 permettant le passage d'un connecteur hydraulique de la première interface de la virole d'extension à la troisième interface du carter support connecteur. Les premiers et deuxièmes perçages 51, 52 sont réalisés de préférence dans le sens de la canalisation. Au niveau des premiers perçages 51, des moyens de bridages sont agencés pour permettre le bridage des connecteurs électriques 3 sur le carter support connecteur 220. Ainsi, les connecteurs électriques 3 suivent les déplacements du carter support connecteur 220. En revanche, les connecteurs hydrauliques 4 traversent le carter support connecteur 220 au niveau du deuxième perçage 52 de sorte que lors des mouvements du carter support connecteur 220, celui-ci coulisse le long des connecteurs hydrauliques 4. Des joints sont placés de préférence sur les connecteurs hydraulique afin d'assurer l'étanchéité entre les canalisations hydrauliques et le carter support connecteur.

Il est visible à la figure 2 que les moyens élastiques 230 sont agencés pour qu'il puisse exister un jeu résiduel J1 entre l'élément de bridage 240 et le carter support connecteur 220 dans l'espace Z1. Ce jeu résiduel J1 est notamment possible du fait de la butée 243 qui permet de définir un espacement minimum Z1 lors du bridage de l'élément de bridage 240. Le jeu résiduel J1 permet d'autoriser un léger déplacement radial du carter support connecteur 220, et du deuxième module, par rapport au premier module (tube statique) sans contraindre les pièces. En effet, en fonctionnement de la soufflante, le deuxième module peut travailler en flexion, ainsi le jeu résiduel J1 permet d'autoriser le ressort à travailler en tangentiel et à absorber ces efforts dus à la flexion. Le jeu résiduel J1 permet également d'autoriser une rotation du carter support connecteur 220, et du deuxième module, par rapport au premier module. Le dimensionnement du jeu résiduel J1 dépend de la masse des premiers et deuxièmes modules, du dimensionnement du ressort, des efforts de connexions de chaque connecteur à vaincre pour assurer la connexion. Ce jeu résiduel J1 est le résultat de la connexion avec le deuxième module. Lorsque l'ensemble amortisseur, i.e. à l'état libre, n'est pas connecté avec le deuxième module, il n'y a pas de jeu résiduel J1.

Il est également visible sur la figure 2 qu'il existe un deuxième jeu J2 arrangé entre le diamètre externe de l'axe du pion de bridage 241 et le diamètre interne de l'orifice 212 du pion de bossage 211. Ce deuxième jeu est un jeu de montage permettant de faciliter le montage de l'ensemble pions de bridage 241 et élément de bridage 240, sur la virole d'extension 210.

Il existe également un troisième jeu J3 arrangé entre le diamètre externe de l'axe des pions de bridage 241 et les orifices de passage desdits pions de bridage 241 du carter support connecteur 220, autorisant ainsi un léger déplacement radial du carter support connecteur 220 en fonctionnement.

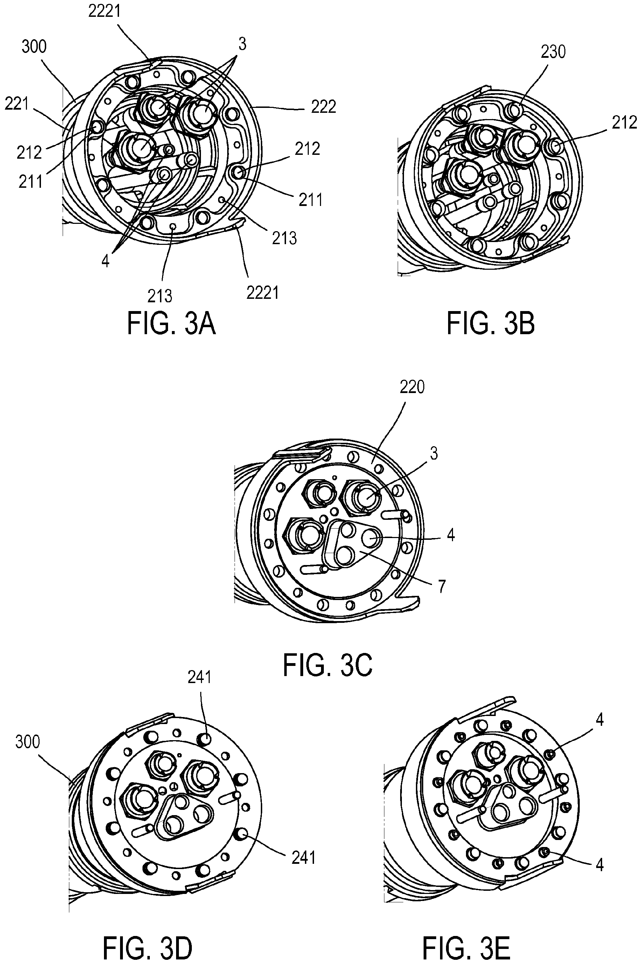

La virole d'extension 210, illustré plus en détail aux figures 3A à 3E est une pièce de forme sensiblement tubulaire adaptée pour être solidarisée, au niveau de sa première extrémité 201 située en amont, sur le fourreau. La deuxième extrémité 202 de la virole d'extension 210 est adaptée pour venir coopérer avec la quatrième interface 221 du carter support connecteur 220 décrit précédemment, ainsi qu'avec le deuxième module notamment au moyen d'au moins une patte de fixation 2221. Cette patte de fixation 2221 est adaptée pour coopérer avec le deuxième module et permet de réaliser un pré-centrage de celui-ci lors de la phase d'accostage et de montage du deuxième module sur le carter support connecteur.

Le carter support connecteur 220 est formé, dans cet exemple de réalisation par une plaque sensiblement circulaire, illustré plus en détail aux figures 3A à 3E.

Les figures 3A à 3E illustrent les différentes étapes d'un procédé d'assemblage de l'ensemble amortisseur et sont décrites conjointement.

A la figure 3A, la première interface 201 de la virole d'extension 210 a été solidarisée au premier module 300. Sont également visibles les connecteurs électriques 3 et les connecteurs hydrauliques 4. La virole d'extension 210 est en position. Elle comporte deux pattes de fixation 2221 destinées à s'insérer dans un chanfrein du deuxième module lors du raccordement du deuxième module au premier module au moyen de l'ensemble amortisseur. La virole d'extension comporte également une pluralité de bossage 211 comportant chacun un orifice 212. La virole d'extension comporte également une pluralité d'orifices 213 de bridages. Les orifices de bridage 213 et les bossages 211 sont répartis le long de la périphérie de la deuxième interface 202 de la virole d'extension 210.

Lors du montage de l'ensemble amortisseur sur la soufflante, selon une première étape illustrée à la figure 3B, les moyens élastiques 230 sont positionnés au niveau de la deuxième interface 202 de la virole d'extension 210 et plus particulièrement sur les bossages 211.

Selon une deuxième étape du procédé de montage illustré à la figure 3C, les connecteurs électriques 3 et les connecteurs hydrauliques 4 sont insérés respectivement dans le premier perçage (ici il y en a trois) et le deuxième perçage (ici il y en a trois) du carter support connecteur 220 et sont fixés au carter support connecteur 220. Les connecteurs électriques sont fixés par un système de bridage avec écrou plat et les connecteurs hydrauliques sont emmanchés au moyen d'une portion 7 du carter support connecteur faisant saillie depuis la troisième interface 222 du carter support connecteur 220. La portion 7 du carter support connecteur a pour fonction de fixer en position les canalisations et de renforcer les canalisations au vu des efforts auxquelles elles pourraient être soumises lors du fonctionnement de la soufflante ainsi que de faciliter la connexion à l'aveugle. Les moyens élastiques 230 sont alors pré-comprimés.

Selon une troisième étape du procédé illustrée à la figure 3D, l'élément de bridage 240 fixe le carter support connecteur 220 à la virole d'extension 210. Pour ce faire, l'élément de bridage 240, qui est dans cet exemple de réalisation une couronne annulaire adaptée pour recouvrir à la fois une portion périphérique du carter support connecteur 220 et une portion périphérique de la virole d'extension 210, est positionné de telle sorte que les pions de bridage 241 de l'élément de bridage 240 traversent les orifices de bridage ainsi que les moyens élastiques 230. Les pions de bridage 241 servent à limiter le débattement radial possible du carter support connecteur 220 (en autorisant un certain débattement radial dû au jeu J3) et à le guider axialement lors des déplacements du système de changement de pas d'hélice.

Selon une dernière étape illustrée à la figure 3E, l'élément de bridage 240 est ensuite fixé sur la virole d'extension par un système de vis 214 traversant à la fois l'élément de bridage 240 et un des orifices de bridage 213 de la virole d'extension.

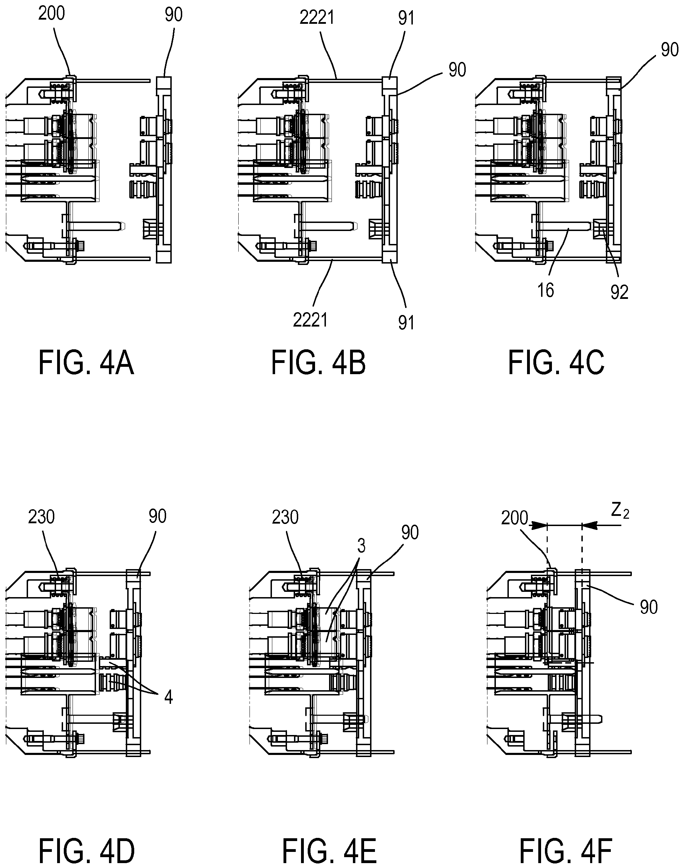

Les figures 4A à 4F illustrent les différentes étapes d'un procédé d'accostage d'un deuxième module à un ensemble amortisseur et sont décrites conjointement.

A la figure 4A, l'ensemble amortisseur 200 est en regard du deuxième module 90 avant accostage du deuxième module à l'ensemble amortisseur permettant de faire la connexion électrique et hydraulique entre un premier module (non représenté) et le deuxième module 90. Les moyens élastiques 230 sont pré-comprimés du fait de l'emmanchement du carter support connecteur à la virole d'extension lors de l'assemblage de l'ensemble amortisseur 200.

Selon une première étape illustrée à la figure 4B, les deux pattes de fixation 2221 sont insérées dans les chanfreins 91 respectifs du deuxième module 90. Ces pattes de fixation 2221 sont des pattes de reprise de couple. Le deuxième module est raccordé au rotor de la soufflante, ainsi il a tendance à être entrainé en rotation quand la soufflante démarre et cela risque de mettre un à-coup dans l'ensemble amortisseur. Les pattes de fixation 2221 permettent de reprendre cet à-coup et de faciliter également la connexion en aveugle du deuxième module à l'ensemble amortisseur. En effet, elles servent de guide, et ce d'autant plus qu'elles sont insérées dans des chanfreins ce qui permet d'assurer le guidage du fait de la forme des chanfreins qui servent également de détrompeurs.

Selon une deuxième étape illustrée à la figure 4C, les pions de centrage 6 du carter support connecteur qui sont au nombre de deux sont insérés dans deux trous 92, par exemple un trou oblong et un trou circulaire, du deuxième module afin d'effectuer le centrage du deuxième module 90 par rapport au carter support connecteur de l'ensemble amortisseur afin que les connexions électriques et hydrauliques se fassent correctement par la suite. En effet, les broches des connecteurs électriques sont fines. Afin que les connecteurs électriques 3 fonctionnent, il est préférable qu'une distance de sécurité Z2 d'une dizaine de millimètres, par exemple de 35,75mm pour le type de connecteur utilisé dans l'exemple de réalisation illustré à la figure 4F, soit assurée entre la phase de bride du deuxième module (partie femelle du connecteur électrique) et la partie mâle du connecteur électrique au niveau du carter support connecteur. Le respect de cette valeur de distance de sécurité permet de s'assurer que la connexion électrique soit faite.

Selon une troisième étape illustrée à la figure 4D, la partie hydraulique, i.e. les connecteurs hydrauliques 4 sont emmanchés dans la partie femelle correspondante du deuxième module 90. Comme expliqué précédemment, les connecteurs hydrauliques 4 comportent des joints à leur extrémité destinée à s'insérer dans le deuxième module. Les joints de chacun des connecteurs hydrauliques 4 viennent s'insérer dans la partie femelle du deuxième module 90. Ces joints permettent de sécuriser la connexion hydraulique car les fluides circulant en fonctionnement de la soufflante sont soumis à une forte pression, typiquement de l'ordre d'une centaine de bars. Les moyens élastiques 230 se compriment petit à petit lors de l'emmanchement des connecteurs hydrauliques 4.

Selon une quatrième étape illustrée à la figure 4E, une fois les connecteurs hydrauliques 4 emmanchés, les connecteurs électriques 3 sont aussi connectés aux parties femelles correspondantes du deuxième module. C'est lors de cette quatrième étape que la compression des moyens élastiques 230 se termine. En effet, la connexion des connecteurs électriques 3 induit une force de pression sur le carter support connecteur et l'élément de bridage et donc sur les moyens élastiques qui se compriment.

La figure 4F représente le deuxième module 90 connecté à un premier module (non visible) via l'ensemble amortisseur 200 avec la distance de sécurité Z2 de 35,75mm assurée.

L'invention n'est pas limitée aux modes de réalisation précédemment décrits en référence aux figures et des variantes pourraient être envisagées sans sortir du cadre de l'invention, qui est définie par les revendications adjointes.

## Revendications

1. Ensemble amortisseur (200) adapté pour être relié et positionné entre deux modules d'une soufflante non carénée, les deux modules étant reliés hydrauliquement et électriquement entre eux au moyen de connecteurs électriques (3) et hydrauliques (4), et présentant des mouvements relatifs, ledit ensemble amortisseur comportant :
- une virole d'extension (210) comportant une première interface (201) adaptée pour être solidarisée sur le premier module ;
- un carter support connecteur (220) comportant :
- une troisième interface (222) adaptée pour être solidarisée sur le deuxième module ; et
- une quatrième interface (221) permettant de réaliser une liaison mécanique entre le carter support connecteur et une deuxième interface de ladite virole d'extension ;
- une pluralité de moyens élastiques (230) agencés entre la virole d'extension et le carter support connecteur pour amortir les déplacements relatifs entre la virole d'extension et le carter support connecteur ;
**caractérisé en ce que** :
- ledit ensemble amortisseur comporte également un élément de bridage (240) solidarisé sur la troisième interface (222) du carter support connecteur (220) et agencé de manière à empêcher la déconnexion de la liaison mécanique entre ladite virole d'extension (210) et le carter support connecteur (220), ledit élément de bridage (240) comportant une butée (243) en appui sur la virole d'extension (210) de manière à définir un espace (Z1) entre la virole d'extension (210) et l'élément de bridage (240) ; et
- les moyens élastiques (230) sont agencés pour qu'il existe un jeu résiduel (J1) entre l'élément de bridage (240) et le carter support connecteur (220).

2. Ensemble amortisseur (200) selon la revendication précédente **caractérisé en ce que** :
- la virole d'extension (210) comporte une deuxième interface (202) comportant une pluralité de bossage (211), chaque bossage :
- formant une surface d'appui d'un moyen élastique de la pluralité de moyens élastiques (230) et ;
- comportant un orifice (212) ; et
- l'élément de bridage (240) comporte une pluralité de pions de bridage (241) adaptés pour traverser les orifices (212) des bossages de la deuxième interface (202) de la virole d'extension 210).

3. Ensemble amortisseur (200) selon l'une quelconque des revendications précédentes **caractérisé en ce que** la deuxième interface (202) de ladite virole d'extension (210) comporte une pluralité d'orifices de bridage (213) adaptés pour solidariser l'élément de bridage (240).

4. Ensemble amortisseur (200) selon l'une quelconque des revendications précédentes **caractérisé en ce que** le carter support connecteur (220) comporte au moins un premier perçage (51) permettant le passage d'un connecteur électrique (3) de la première interface (201) de la virole d'extension (210) à la troisième interface (222) du carter support connecteur (220) et un deuxième perçage (52) permettant le passage d'un connecteur hydraulique (4) de la première interface (201) de la virole d'extension (210) à la troisième interface (222) du carter support connecteur (220).

5. Ensemble amortisseur (200) selon l'une quelconque des revendications précédentes **caractérisé en ce que** la troisième interface (222) du carter support connecteur (220) comporte une pluralité de pions de centrage (6) adaptés pour coopérer avec le deuxième module de façon à centrer le deuxième module par rapport au carter support connecteur (220).

6. Ensemble amortisseur (200) selon l'une quelconque des revendications précédentes **caractérisé en ce que** la virole d'extension (210) comporte au moins une patte de fixation (2221) adaptée pour coopérer avec le deuxième module de manière à centrer le deuxième module par rapport au carter support connecteur (220).

7. Soufflante non carénée **caractérisée en ce qu'**elle comporte un ensemble amortisseur (200) selon l'une des revendications précédentes positionné entre deux modules d'une soufflante non carénée reliés hydrauliquement et électriquement entre eux et présentant des mouvements relatifs.

8. Procédé d'assemblage d'un ensemble amortisseur selon l'une des revendications 1 à 6 **caractérisé en ce que** le procédé comporte :
- une première étape de positionnement des moyens élastiques (230) au niveau de la deuxième interface (202) de la virole d'extension (210) ;
- une deuxième étape d'emmanchement du carter support connecteur (220) et de fixation des connecteurs électriques (3) et hydrauliques (4) au carter support connecteur (220) en comprimant les moyens élastiques (230) ;
- une troisième étape de fixation du carter support connecteur (220) à la virole d'extension (210) au moyen de l'élément de bridage (240).

## Patentansprüche

1. Stoßdämpferanordnung (200), die zur Verbindung und Positionierung zwischen zwei Modulen eines Propfangebläses geeignet ist, wobei die zwei Module mittels elektrischer (3) und hydraulischer (4) Verbinder hydraulisch und elektrisch miteinander verbunden sind und relative Bewegungen aufweisen, wobei die Stoßdämpferanordnung aufweist:
- einen Erweiterungsring (210), aufweisend eine erste Schnittstelle (201), die für eine feste Verbindung auf dem ersten Modul geeignet ist;
- ein Verbinderstützgehäuse (220), aufweisend:
- eine dritte Schnittstelle (222), die für eine feste Verbindung auf dem zweiten Modul geeignet ist; und
- eine vierte Schnittstelle (221), die erlaubt, eine mechanische Verbindung zwischen dem Verbinderstützgehäuse und einer zweiten Schnittstelle des Erweiterungsrings herzustellen;
- eine Vielzahl elastischer Mittel (230), die zwischen dem Erweiterungsring und dem Verbinderstützgehäuse eingerichtet sind, um die relativen Verlagerungen zwischen dem Erweiterungsring und dem Verbinderstützgehäuse zu dämpfen;
**dadurch gekennzeichnet, dass**:
- die Stoßdämpferanordnung ebenfalls ein Flanschelement (240) aufweist, das auf der dritten Schnittstelle (222) des Verbinderstützgehäuses (220) fest verbunden und derart eingerichtet ist, dass das Lösen der mechanischen Verbindung zwischen dem Erweiterungsring (210) und dem Verbinderstützgehäuse (220) verhindert wird, wobei das Flanschelement (240) einen Anschlag (243) aufweist, der sich auf dem Erweiterungsring (210) derart abstützt, dass ein Raum (Z1) zwischen dem Erweiterungsring (210) und dem Flanschelement (240) definiert wird; und
- die elastischen Mittel (230) eingerichtet sind, damit es ein Restspiel (J1) zwischen dem Flanschelement (240) und dem Verbinderstützgehäuse (220) gibt.

2. Stoßdämpferanordnung (200) nach vorangehendem Anspruch, **dadurch gekennzeichnet, dass**:
- der Erweiterungsring (210) eine zweite Schnittstelle (202) aufweist, die eine Vielzahl von Vorsprüngen (211) aufweist, wobei jeder Vorsprung:
- eine Stützfläche eines elastischen Mittels der Vielzahl von elastischen Mitteln (230) aufweist und
- eine Öffnung (212) aufweist, und
- das Flanschelement (240) eine Vielzahl von Flanschstiften (241) aufweist, die zum Durchqueren der Öffnungen (212) der Vorsprünge der zweiten Schnittstelle (202) des Erweiterungsrings (210) geeignet sind.

3. Stoßdämpferanordnung (200) nach einem der vorangehenden Ansprüche, **dadurch gekennzeichnet, dass** die zweite Schnittstelle (202) des Erweiterungsrings (210) eine Vielzahl von Flanschöffnungen (213) aufweist, die zum festen Verbinden des Flanschelements (240) geeignet sind.

4. Stoßdämpferanordnung (200) nach einem der vorangehenden Ansprüche, **dadurch gekennzeichnet, dass** das Verbinderstützgehäuse (220) mindestens eine erste Bohrung (51) aufweist, welche den Durchgang eines elektrischen Verbinders (3) von der ersten Schnittstelle (201) des Erweiterungsrings (210) zu der dritten Schnittstelle (222) des Verbinderstützgehäuses (220) erlaubt, und eine zweite Bohrung (52), welche den Durchgang eines hydraulischen Verbinders (4) von der ersten Schnittstelle (201) des Erweiterungsrings (210) zu der dritten Schnittstelle (222) des Verbinderstützgehäuses (220) erlaubt.

5. Stoßdämpferanordnung (200) nach einem der vorangehenden Ansprüche, **dadurch gekennzeichnet, dass** die dritte Schnittstelle (222) des Verbinderstützgehäuses (220) eine Vielzahl von Zentrierstiften (6) aufweist, die zum Zusammenwirken mit dem zweiten Modul derart geeignet sind, dass das zweite Modul in Bezug auf das Verbinderstützgehäuse (220) zentriert wird.

6. Stoßdämpferanordnung (200) nach einem der vorangehenden Ansprüche, **dadurch gekennzeichnet, dass** der Erweiterungsring (210) mindestens einen Befestigungsfuß (2221) aufweist, der zum Zusammenwirken mit dem zweiten Modul derart geeignet ist, dass das zweite Modul in Bezug auf das Verbinderstützgehäuse (220) zentriert wird.

7. Propfangebläse, **dadurch gekennzeichnet, dass** es eine Stoßdämpferanordnung (200) nach einem der vorangehenden Ansprüche aufweist, die zwischen zwei Modulen eines Propfangebläses positioniert ist, die hydraulisch und elektrisch miteinander verbunden sind und relative Bewegungen aufweisen.

8. Verfahren zur Montage einer Stoßdämpferanordnung nach einem der Ansprüche 1 bis 6, **dadurch gekennzeichnet, dass** das Verfahren aufweist:
- einen ersten Schritt der Positionierung der elastischen Mittel (230) im Bereich der zweiten Schnittstelle (202) des Erweiterungsrings (210);
- einen zweiten Schritt des Einsetzens des Verbinderstützgehäuses (220) und des Befestigens der elektrischen (3) und hydraulischen (4) Verbinder am Verbinderstützgehäuse (220) durch Komprimieren der elastischen Mittel (230);
- einen dritten Schritt des Befestigens des Verbinderstützgehäuses (220) am Erweiterungsring (210) mittels des Flanschelements (240).

## Claims

1. Shock absorber assembly (200) suitable for being connected and positioned between two modules of an unducted fan, the two modules being hydraulically and electrically connected together by means of electrical (3) and hydraulic (4) connectors, and having relative movements, said shock absorber assembly comprising:
- an extension ferrule (210) comprising a first interface (201) suitable for being rigidly attached on the first module;
- a connector support housing (220) comprising:
- a third interface (222) suitable for being rigidly attached on the second module; and
- a fourth interface (221) allowing a mechanical connection to be made between the connector support housing and a second interface of said extension ferrule;
- a plurality of elastic means (230) arranged between the extension ferrule and the connector support housing to absorb relative displacements between the extension ferrule and the connector support housing;
**characterised in that**:
- said shock absorber assembly also comprises a flange element (240) rigidly attached on the third interface (222) of the connector support housing (220) and arranged in such a way as to prevent the disconnection of the mechanical connection between said extension ferrule (210) and the connector support housing (220), said flange element (240) comprising a stop (243) bearing on the extension ferrule (210) in such a way as to define a space (Z1) between the extension ferrule (210) and the flange element (240); and
- the elastic means (230) are arranged so that a residual clearance (J1) exists between the flange element (240) and the connector support housing (220).

2. Shock absorber assembly (200) according to the preceding claim **characterised in that**:
- the extension ferrule (210) comprises a second interface (202) comprising a plurality of bosses (211), each boss:
- forming a bearing surface for one elastic means of the plurality of elastic means (230) and;
- comprising an aperture (212); and
- the flange element (240) comprises a plurality of flange pins (240) suitable for passing through the apertures (212) of the bosses of the second interface (202) of the extension ferrule (210).

3. Shock absorber assembly (200) according to any of the preceding claims **characterised in that** the second interface (202) of said extension ferrule (210) comprises a plurality of flange apertures (213) suitable for rigidly attaching the flange element (240).

4. Shock absorber assembly (200) according to any of the preceding claims **characterised in that** the connector support housing (220) comprises at least one first drilling (51) allowing the passage of an electrical connector (3) from the first interface (201) of the extension ferrule (210) to the third interface (222) of the connector support housing (220) and a second drilling (52) allowing the passage of a hydraulic connector (4) from the first interface (201) of the extension ferrule (210) to the third interface (222) of the connector support housing (220).

5. Shock absorber assembly (200) according to any of the preceding claims **characterised in that** the third interface (222) of the connector support housing (220) comprises a plurality of centring pins (6) suitable for cooperating with the second module so as to centre the second module with respect to the connector support housing (220).

6. Shock absorber assembly (200) according to any of the preceding claims **characterised in that** the extension ferrule (210) comprises at least one fixing lug (2221) suitable for cooperating with the second module in such a way as to centre the second module with respect to the connector support housing (220).

7. Unducted fan **characterized in that** it comprises a shock absorber assembly (200) according to one of the preceding claims positioned between two modules of an unducted fan hydraulically and electrically connected together and having relative movements.

8. Method for assembling a shock absorber assembly according to one of claims 1 to 6 **characterised in that** the method comprises:
- a first step of positioning elastic means (230) at the level of the second interface (202) of the extension ferrule (210),
- a second step of fitting together the connector support housing (220) and fastening the electrical (3) and hydraulic (4) connectors to the connector support housing (220) while compressing the elastic means (230),
- a third step of fastening the connector support housing (220) to the extension ferrule (210) by means of the flange element (240).
